# EUROPEAN PATENT SPECIFICATION

(11) **EP 0 763 436 B1**
(45) Date of publication and mention of the grant of the patent: **15.03.2000**
(21) Application number: 96850147.8
(22) Date of filing: 12.09.1996
(51) Int. Cl.: B60B 7/06

(54) **Device for mounting a wheel cover on a rim of a vehicle wheel**
Vorrichtung zum Montieren einer Radkappe an die Felge eines Kraftfahrzeugrades
Dispositif pour fixer un enjoliveur de roue sur une jante de roue de véhicule

(30) Priority: 15.09.1995 SE 9503219
(43) Date of publication of application: 19.03.1997
(73) Proprietor: UNITED WHEELCOVERS AKTIEBOLAG, S-272 24 Simrishamn (SE)
(72) Inventor: Arvidsson, Krister, 270 11 Abbekas (SE)
(74) Representative: Eriksson, Kjell

(56) References cited:
- EP-A- 0 629 517
- DE-B- 2 234 221

## Description

The present invention relates to a device for mounting a wheel cover on a rim of a vehicle wheel, said wheel comprising a rim edge that is provided with a groove that is oriented towards the centre axis of the wheel, said device including a securing ring carrying a resilient ring that in its turn carries a number of securing means for the securing ring, said securing ring being connected to the wheel cover or constituting an integral part together with the wheel cover.

From SE-C2-501 440 is previously known a device having peripheral beads supported by resilient tongues, said beads being intended to cooperate with one or more recesses in the wheel cover. A resilient ring urges the beads towards the recesses in the wheel cover. This device functions satisfactory for wheel covers of wheels for private cars, however said solution is not suitable for wheel covers of larger vehicle wheels, e.g. for lorries and buses. The reason therefore is that the rim edge, being the only part where it is possible to mount a wheel cover, has a too large undercutting to allow a device having beads on a resilient ring to be pushed on and still having enough resilience in the system after mounting of the wheel cover to avoid rotation of the wheel cover or loosening of the wheel cover from the wheel.

The previously known wheel covers that at present are used for lorries and buses have expensive, complicated fastening systems that take a long time to mount. Despite this a varying quality of the final product is achieved, this being shown in frequent "wobbling" of the wheel covers of the wheels. A result from this is that many lorries and buses lack wheel covers.

The aim of the present invention is to provide a device of the type mentioned above, said device being essentially easier to mount/dismount than known devices. Despite this the device is mounted on the wheel cover in a secure way and tendencies of "wobbling" is in practice totally eliminated.

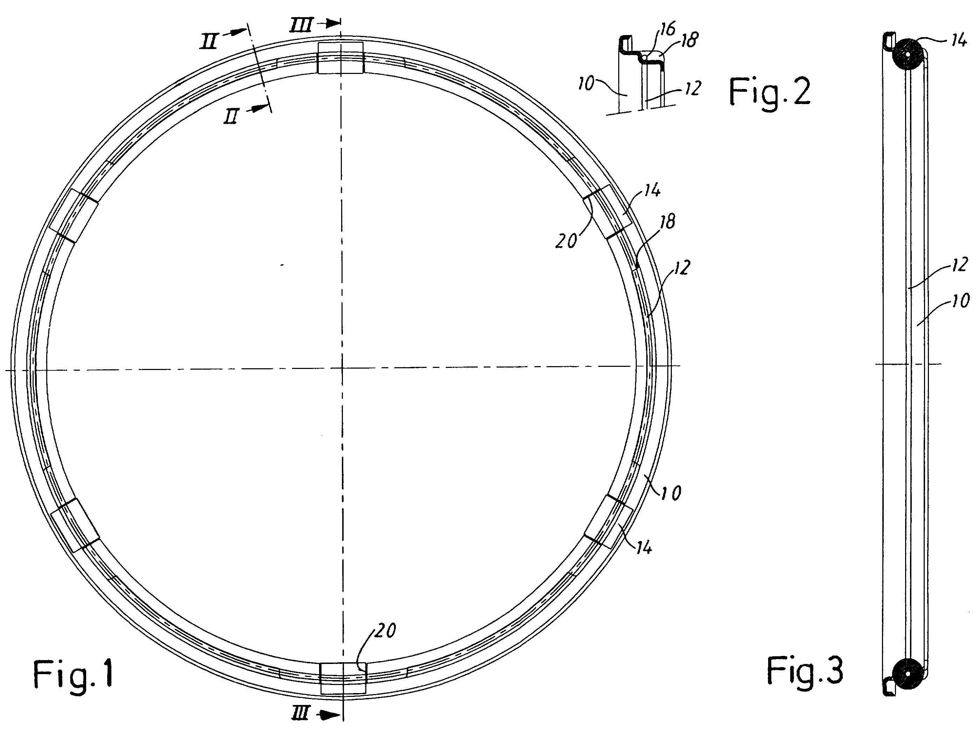

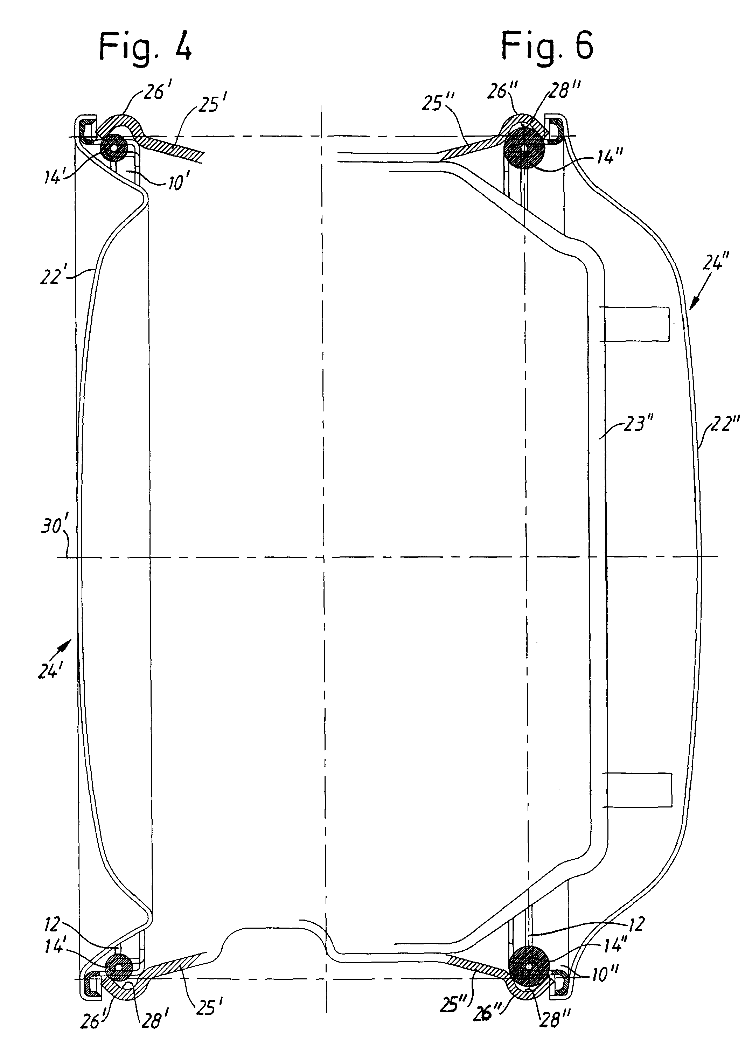

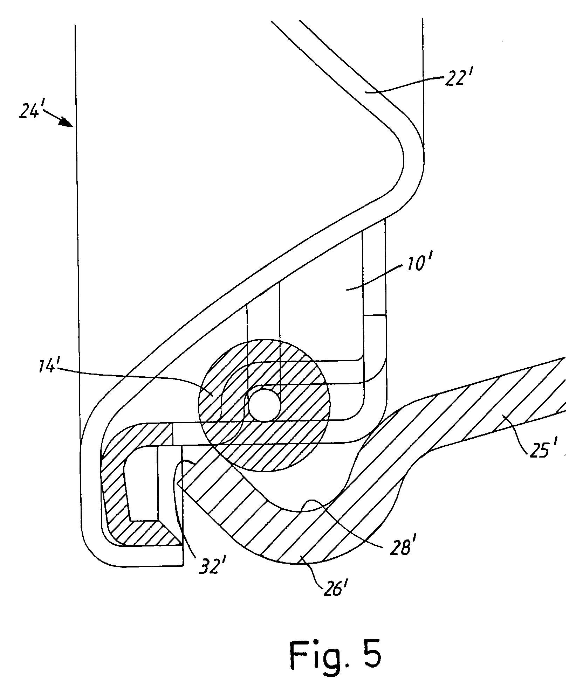

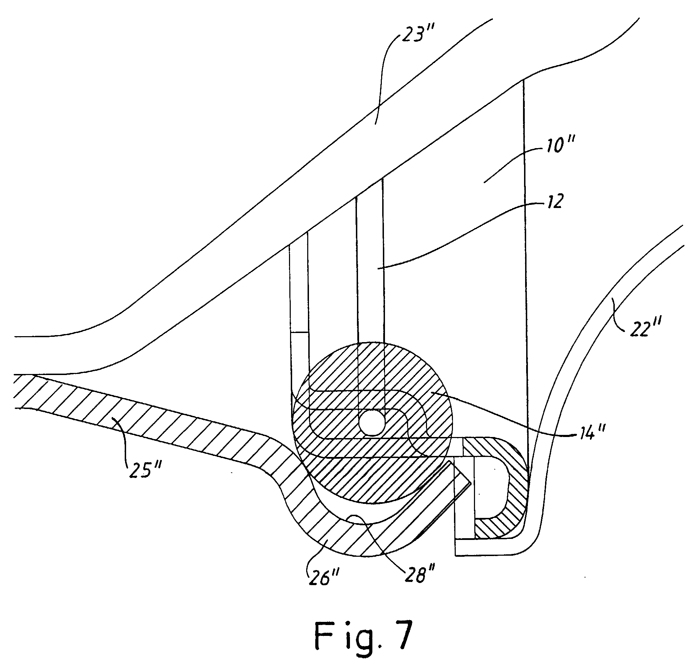

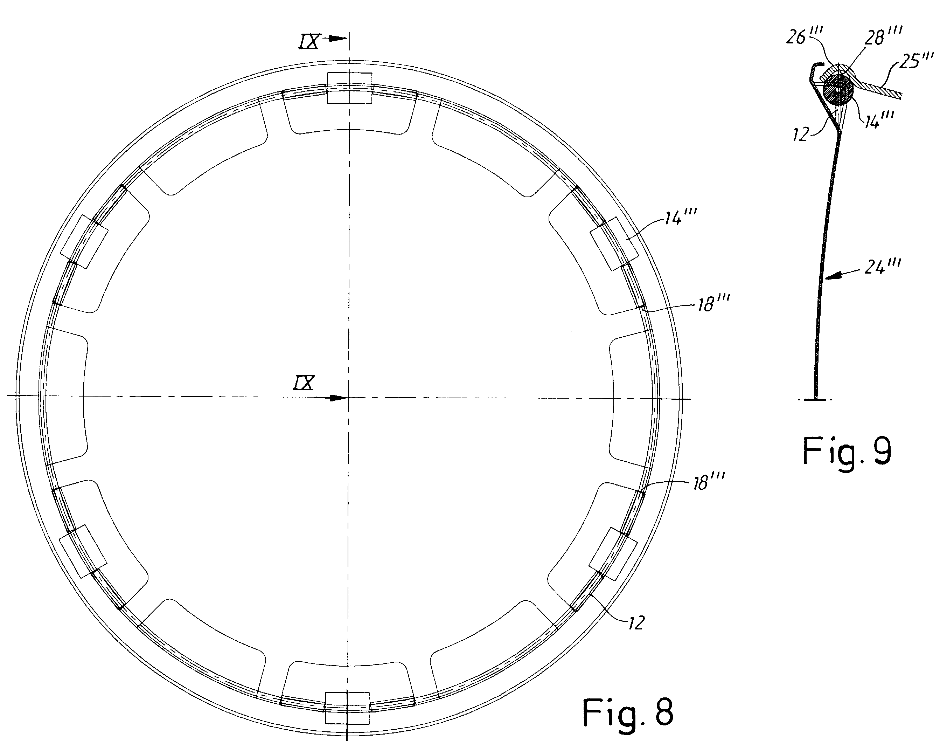

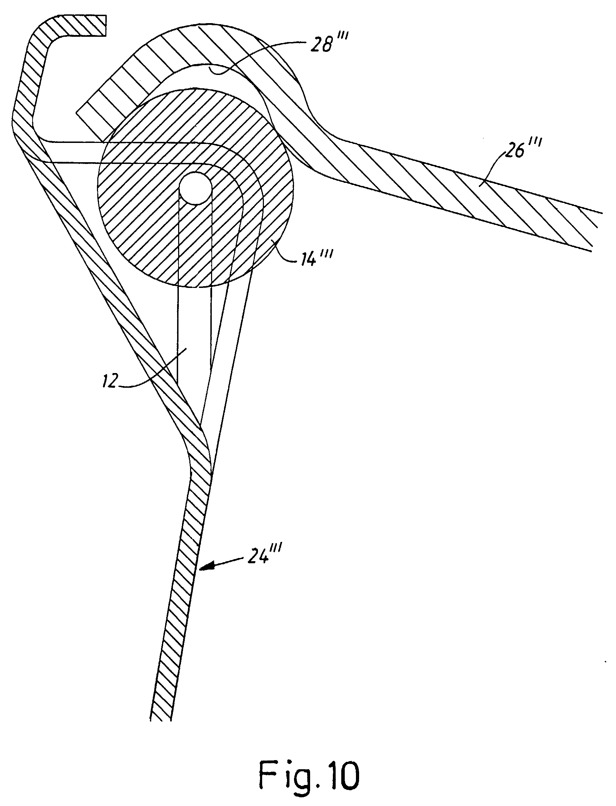

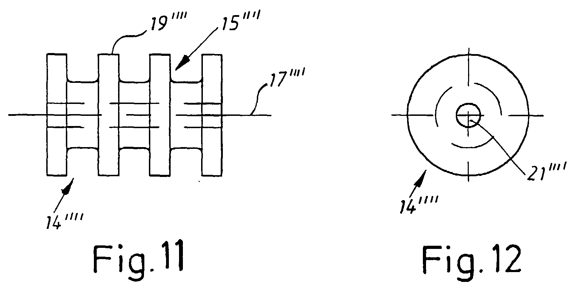

Below a number of embodiments of the invention will be described, reference being made to the accompanying drawings, where fig.1 shows a top view of a device according to the invention; fig.2 shows a section according to II-II in fig.1; fig.3 shows a section according to III-III in fig.1; fig.4 shows a modified embodiment of the device according to the invention, said device being connected to a wheel cover; fig.5 shows in enlarged scale a detail of the lower portion of fig.4; fig.6 shows a further modified embodiment of the device according to the invention, said device being connected to a wheel cover and mounted on a wheel rim; fig.7 shows in enlarged scale a detail of the lower portion of fig.6; fig.8 shows a top view of still a modified embodiment of the device according to the invention; fig.9 shows the upper half of the device according to fig.8 mounted on a wheel rim; fig.10 shows in enlarged scale a detail of the upper portion of fig.9; fig.11 shows a side view of a modified embodiment of a roller being part of the device according to the invention; and fig.12 shows and end view of the roller according to fig.11.

The device disclosed in fig.1-3 includes a securing ring 10, a resilient ring 12 and six (6) rollers 14, that with equal graduation are provided around the securing ring 10. From fig.2 it can especially be learnt that the securing ring in cross-section has the shape of a "double-Z". The resilient ring 12 is connected to the securing ring 10 in that the resilient ring 12 passes through holes 16 in walls 18 of the securing ring 10, sasid walls 18 extend transverse to the longitudinal direction of the resilient ring 12. Preferably the walls 18 are integral with the securing ring 10 that preferably is injection moulded of plastic. As can be learnt from fig.1 the walls are in pairs located symmetrically on both sides of each roller 14. The provision of the walls 18 results in that in the area between every roller 14 and the adherent walls 18 the securing ring 10 in cross-section has the shape of a "single-Z".

In the area of each roller 14 the securing ring 10 is provided with recesses 20 that in the longitudinal direction of the securing ring 10 have an extension that slightly exxagerate the length of the rollers 14, i.e. the rollers 14 are freely rotatable relative to the resilient ring 12 in the recesses 20.

When mounting the resilient ring 12 and rollers 14 upon the securing ring 10 the resilient ring 12 is in the shape of an open wire and is thread through the holes 16 of the walls 18, a roller 14 being thread upon the wire when said wire passing through a recess 20. When the resilient ring /wire has passed through all the holes 16 of the walls 18 it is according to a preferred method of mounting so arranged that the ends of the resilient ring 12 are located in the through-going hole of a roller 14. Said roller is prefereably provided with some sort of locking means in order to prevent the roller and the ends of the resilient ring 12 to be displaced relative to each other. According to an alternative method of mounting the ends of the resilient ring 12 can be welded together when all rollers 14 are mounted.

The embodiment of the device, disclosed in fig.4, includes rollers 14' having a smaller diameter than the rollers 14 according to figs. 1-3. Apart from that the device according to fig.4 is in principle similar to the device according to figs.1-3. As can be seen from fig.4 the securing ring 10' is connected to a wheel cover 22', said connection being effected in a suitable way, e.g. by gluing, riveting, welding etc.. Also the securing ring 10 shown in figs.1-3 is connected in a corresponding way to a wheel cover. The wheel cover 22' disclosed in fig.4 is intended to be mounted upon a rear wheel of the vehicle. Since the disc of an outer rear wheel curves inwardly the wheel cover 22' also has a curved-in shape along its periphery. In order that the rollers 14' should not interfere with the curved-in shape of the wheel cover 22 the rollers 14' have a relatively small diameter. The reason why the disc of an outer rear wheel curves inwardly is that thereby it is possible to couple together a further rear wheel having a bulging disc. It is extremely common that lorries and buses have such rear wheels coupled together in pairs.

The unit 24' including the securing ring 10' and the wheel cover 24' is intended to be mounted on a rim edge 26' of a rim 25', see fig.4 where the outer portion of a rim edge 26' is disclosed.

In fig.5 an enlarged detail of the lowest portion in fig.4 is disclosed. From fig.4 and 5 it can be learnt that the rim edge 26' has a circumferential groove 28' at its free end, said groove facing towards the centre axis 30' of the wheel.

The mounting itself is carried out in such a way that the unit 24', having the securing ring 10' facing towards the wheel, is entered in the groove 28' of the rim edge 26' along a portion of its periphery. Then the rest of the unit 24' is pressed towards the rim edge 26' and the rollers 14', not yet mounted, will rotate and "climb" the free edge 32' of the rim edge 26'. When the rollers 14' pass said edge 32' a certain radial compression of the unit 24', towards the centre axis 30', takes place. When the rollers 14' have passed said edge 32 a radial expansion of the unit 24' will take place. As is clearly shown in fig.5 a portion of the periphery of the rollers 14' contacts a portion of the groove 28'. In the position shown in fig.4 and 5 when the unit is mounted in its final position on the rim edge 26' of the wheel also an inner portion of the securing ring 10' abuts the groove 28'. By this arrangement the position of the unit 24' is fixed in both radial and axial direction of the wheel. It should be noticed that in the mounting phase the rollers do normally not rotate a complete revolution.

When the unit 24' is to be dismounted a portion of the unit 24' is pulled outwardly causing the rollers/rollers 14' of said portion to climb the edge 32' in opposite direction compared to in the mounting phase.

The embodiment disclosed in figs.6 and 7 of a unit 24" is intended to be mounted on a front wheel of a lorry or bus. The unit 24" is assembled in principally the same way as the unit 24', i.e. the unit 24" includes a securing ring 10" and a wheel cover 22" that are connected to each other in a suitable way. The wheel cover 22 has a bulging shape in order to be adapted to a bulging disc 23" of the front wheel. By tradition front wheels of lorries and buses have a bulging disc. Since the wheel cover 22" is bulging rollers 14" having larger diameter can be used with the unit 24" than with the unit 24'.

The rim edge 26" of the rim 25" and the adherent groove 28" have in principal the same design both for a front wheel and a rear wheel. Therefore, as regards mounting and dismounting of the unit 24", reference is made to what has been said above in connection to figs.4 and 5. It should be noticed that for the embodiment according to figs.6 and 7 the rollers 14" have such a relative seen large diameter that the rollers 14" contact the groove 28" along two portions. When the rollers 14" have assumed the position of figs.6 and 7 the unit 24" is mounted in itsfinal position, said unit 24" being fixed in both radial and axial direction of the wheel.

In the embodiment shown in figs.8-10 the securing ring and the wheel cover are designed as an integral unit 24‴. In a correspoding way as for the embodiments described above the unit 24‴ carries a resilient ring 12 that rotatably carries a number of rollers 14, in the disclosed example six (6) rollers. The rollers 14‴ are arranged at equal graduation around the resilient ring 12 that is supported in principally the same way as in the embodiments described above, i.e. the resilient ring 12 passes through holes in the walls 18‴ of the unit 24‴, said walls 18‴ having an extension transverse to the longitudinal direction of the resilient ring 12.

Since the rim edge 26‴ and its adherent groove 28‴ are designed in principally the same way as in the embodiment according to figs. 4 and 5, reference is made to what has been said above in connection with the unit 24' as regards mounting and dismounting of the unit 24‴.

In the embodiments of the invention described above uniform rollers 14; 14'; 14" and 14‴ are disclosed. In fig.11 and 12 a roller 14"" is disclosed, said roller being provided with a number of notches 15 that are separated in the axial direction of the roller 14"" and extend around the centre axis 17 of the roller 14"". By that a number of cams 19'''' are created that extend around the centre axis 17'''', said cams having a fixed radius relative to the centre axis 17''''. The roller 14'''' functions in a corresponding way as the above described uniform rollers 14; 14';14";14'''. However, it is realized at once that the roller 14'''' includes less material than the uniform rollers.

Within the scope of the invention it is possible that the rollers do not have a cylindrical base-shape, i.e. a segment, e.g. in the shape of a wedge, is removed from the roller, said segment extending all the way to a central hole of the roller, see the reference numeral 21‴ in figs.11-12. The transversal dimensions of the segment in connection to the centre hole should be somewhat smaller than the diameter of the centre hole and the cross-section of the resilient ring since such a design makes it possible to sideways snap the roller on the resilient ring 12, i.e. there is no need to thread the rollers on the resilient ring as described above. The mentioned relation of dimensions also results in that the roller is maintained on the resilient ring 12. In order to guarantee that a cylindrical portion of the roller contacts the rim edge when the wheel cover is mounted it is suitable to have some kind of restriction as regards the rotation of the roller.

All rollers 14;14';14";14‴;14'''' described above have a linear centre hole, see the reference numeral 21'''' of figs.11-12, said hole having a circular cross-section and receiving a curved portion of the resilient ring 12. However, the radius of curvature is large compared to the length of the rollers, i.e. the rollers 14;14';14";14‴ can rotate relative to the resilient ring 12 even if the diameter of the hole is only sligthly larger than the cross-sectional diameter of the resilient ring 12.

All rollers 14;14';14";14‴;14'''' described above have a length exceeding the diameter of the roller. The expression the diameter of the roller 14'''' makes reference to the diameter of the cams 19''''. Preferably the rollers have a length that is about twice the diameter of the rollers.

In the embodiments described above a number of rollers are arranged upon the resilient ring 12. However, within the scope of the invention it is possible to replace e.g. half of the rollers by beads mounted upon the resilient ring 12, said beads being non-symmetrical of rotation relative to the resilient ring 12. However, the beads could be pivotable a certain angle relative to the resilient ring, this being preferred in connection with the mounting/dismounting of the device. The cross-section of such a bead could be designed in various ways. However, it is importatant that the portion of the bead that is to be received in the groove 28;28';28";28‴ has a shape adapted to the groove. To avoid the presence of too large forces in connection with dismounting of such an embodiment it is necessary to mark where the rollers are located in order to apply the dismounting force in the right portion of the device, i.e. where the rollers are located.

In the embodiments described above the resilient ring 12 is in principal fully circular. However, within the scope of the invention an alternative design of the resilient ring is possible. Said ring is still having a circular basic shape but in the areas of the location of the rollers/beads the resilient ring has portions displaced outwardly, said portions receiving the rollers/beads. Thus, the resilient ring is equipped with a number of "teeth" along its periphery, said rollers/beads being supported by the teeth. The benefit of such a design of the resilient ring is that an extra space for possible balancing weights is created.

## Claims

1. Device for mounting a wheel cover on a rim of a vehicle wheel, said wheel comprising a rim edge (26;26';26";26‴) provided with a groove that is oriented towards the centre axis (30;30';30") of the wheel, said device including a securing ring (10;10';10") carrying a resilient ring (12) that in its turn carries a number of securing means for the securing ring (10;10';10"), said securing ring (10;10';10") being connected to the wheel cover (22';22") or constituting an integral part (24‴) together with the wheel cover,
**characterized in that** the securing means includes a number of rollers (14;14';14";14‴;14'''') that rotatably are carried by the resilient ring (12), said rollers (14;14';14";14‴;14''''), in mounted position of the device, being adapted to be received in the groove (28;28';28";28‴).

2. Device according to claim 1 or 2,
**characterized in that** the rollers (14;14';14";14‴) are uniform.

3. Device according to claim 1 or 2,
**characterized in that** the rollers (14'''') are provided with a number of cams (19''''), the circumference of said cams extending around a centre axis (17'''') of the rollers (14'''') and at a constant radius relative to said centre axis (17'''').

4. Device according to any of the previous claims,
**characterized in that** the rollers (14;14';14";14‴;14'''') are provided at a constant graduation along the resilient ring (12).

5. Device according to any of the previous claims,
**characterized in that** all of the securing means constitute of rollers (14;14';14";14‴;14'''').

6. Device according to any of the claims 1-4,
**characterized in that** certain of the securing means constitute of beads that are non-symmetrical of rotation relative to the resilient ring (12).

7. Device according to claim 6,
**characterized in that** the securing means on one half of the resilient ring constitute of rollers while the securing means of the other half constitute of beads.

8. Device according to claims 1-4 and 7,
**characterized in that** the beads are pivotable a certain degree relative to the resilient ring (12).

9. Device according to any of the previous claims,
**characterized in that** the rollers (14;14';14";14‴;14'''') have a length that exceeds the diameter of the rollers, the length being preferably about twice the diameter of the rollers.

10. Device according to any of the previous claims,
**characterized in that** the roller are so designed that along the entire length of the rollers a portion is removed, said portion extending between the centre hole and the envelope surface of the rollers, in connection to the centre hole the portion has a transverse dimension that is smaller than the diameter of the centre hole and the cross-sectional diameter of the resilient ring (12).

## Patentansprüche

1. Vorrichtung zum Montieren einer Radkappe an eine Felge eines Fahrzeugrades, wobei das Rad eine Felgenkante (26, 26', 26", 26"') aufweist, die mit einer Rille bzw. Nut versehen ist, die in Richtung der Mittelachse (30, 30', 30") des Rades ausgerichtet ist, wobei die Vorrichtung einen Sicherungsring (10, 10', 10") aufweist, der einen elastischen Ring (12) trägt, der wiederum eine Anzahl von Sicherungseinrichtungen für den Sicherungsring (10, 10', 10") trägt, wobei der Sicherungsring (10, 10', 10") mit der Radkappe (22', 22") verbunden ist oder mit der Radkappe ein einstückiges Bauteil (24"') bildet,
dadurch gekennzeichnet, daß die Sicherungsvorrichtung eine Anzahl von Rollen (14, 14', 14", 14"', 14"") beinhaltet, die drehbar von dem elastischen Ring (12) getragen werden, wobei die Rollen (14, 14', 14", 14"', 14"") in der montierten Position der Vorrichtung dafür vorgesehen sind, in der Nut (28, 28', 28", 28"') aufgenommen zu werden.

2. Vorrichtung nach Anspruch 1, dadurch gekennzeichnet, daß die Rollen (14, 14', 14", 14"') gleichartig sind.

3. Vorrichtung nach Anspruch 1 oder 2, dadurch gekennzeichnet, daß die Rollen (14"") mit einer Anzahl von Nocken (19"") ausgestattet sind, wobei der Umfang der Nocken sich um eine Mittelachse (17"") der Rollen (14"") und mit einem konstanten Radius relativ zu der Mittelachse (17"") erstreckt.

4. Vorrichtung nach einem der vorhergehenden Ansprüche, dadurch gekennzeichnet, daß die Rollen (14, 14', 14", 14"', 14"") an einer konstanten Gradeinteilung entlang des elastischen Rings (12) bereitgestellt sind.

5. Vorrichtung nach einem der vorhergehenden Ansprüche, dadurch gekennzeichnet, daß alle Sicherungseinrichtungen aus Rollen (14, 14', 14", 14"', 14"") gebildet sind.

6. Vorrichtung nach einem der Ansprüche 1 bis 4, dadurch gekennzeichnet, daß bestimmte Sicherungseinrichtungen aus Perlen, die nicht rotationssymmetrisch in Bezug auf den elastischen Ring (12) sind, gebildet sind.

7. Vorrichtung nach Anspruch 6, dadurch gekennzeichnet, daß die Sicherungseinrichtungen an einer Hälfte des elastischen Rings aus Rollen gebildet werden, während die Sicherungseinrichtungen der anderen Hälfte aus Perlen gebildet sind.

8. Vorrichtung nach einem der Ansprüche 1 bis 4 und 7, dadurch gekennzeichnet, daß die Perlen um einen bestimmten Grad relativ zu dem elastischen Ring (12) dreh- bzw. schwenkbar sind.

9. Vorrichtung nach einem der vorherigen Ansprüche, dadurch gekennzeichnet, daß die Rollen (14, 14', 14", 14"', 14"") eine Länge haben, die den Durchmesser der Rollen übertrifft, wobei die Länge vorzugsweise etwa zweimal dem Durchmesser der Rollen entspricht.

10. Vorrichtung nach einem der vorhergehenden Ansprüche, dadurch gekennzeichnet, daß die Rollen derart konstruiert sind, daß entlang der gesamten Länge der Rollen ein Abschnitt entfernt ist, wobei der Abschnitt sich zwischen dem mittleren Loch und der Umfangsfläche der Rollen erstreckt, und wobei der Abschnitt an der Verbindung mit dem zentralen Loch eine transversale Abmessung besitzt, die kleiner als der Durchmesser des zentralen Lochs und des Querschnittsdurchmessers des elastischen Rings (12) ist.

## Revendications

1. Dispositif destiné à monter un enjoliveur de roue sur une jante d'une roue de véhicule, ladite roue comportant un bord de jante (26; 26; 26''; 26‴) pourvu d'une rainure qui est orientée vers l'axe central (30; 30'; 30'') de la roue, ledit dispositif comprenant un anneau de fixation (10; 10'; 10'') comprenant un anneau élastique (12) qui à son tour porte plusieurs moyens de fixation pour l'anneau de fixation (10; 10'; 10''), ledit anneau de fixation (10; 10'; 10'') étant relié à l'enjoliveur de roue (22'; 22'') ou bien constituant une partie intégrale avec l'enjoliveur de roue, caractérisé en ce que les moyens de fixation comprennent plusieurs galets (14; 14'; 14''; 14‴; 14'''') qui sont supportés de façon rotative par l'anneau élastique (12), lesdits galets (14; 14'; 14''; 14‴; 14''''), en position montée du dispositif, étant prévus pour être reçus dans la rainure (28; 28'; 28''; 28‴).

2. Dispositif selon la revendication 1 ou 2, caractérisé en ce que les galets (14; 14'; 14''; 14‴) sont uniformes.

3. Dispositif selon la revendication 1 ou 2, caractérisé en ce que les galets (14'''') sont pourvus de plusieurs cames (19''''), la circonférence desdites cames s'étendant autour d'un axe central (17'''') des galets (14'''') et à un rayon constant par rapport au dit axe central (17'''').

4. Dispositif selon l'une quelconque des revendications précédentes, caractérisé en ce que les galets (14; 14'; 14''; 14‴; 14"") sont prévus à un espacement constant le long de l'anneau élastique (12).

5. Dispositif selon l'une quelconque des revendications précédentes, caractérisé en ce que tous les moyens de fixation se composent de galets (14; 14'; 14''; 14‴; 14"").

6. Dispositif selon l'une quelconque des revendications 1 à 4, caractérisé en ce que certains des moyens de fixation se composent de bourrelets qui ne sont pas symétriques en rotation par rapport à l'anneau élastique (12).

7. Dispositif selon la revendication 6, caractérisé en ce que les moyens de fixation sur une moitié de l'anneau élastique se composent de galets alors que les moyens de fixation de l'autre moitié se composent de bourrelets.

8. Dispositif selon les revendications 1 à 4 et 7, caractérisé en ce que les bourrelets peuvent pivoter d'un certain degré par rapport à l'anneau élastique (12).

9. Dispositif selon l'une quelconque des revendications précédentes, caractérisé en ce que les galets (14; 14'; 14''; 14‴; 14"") ont une longueur qui dépasse le diamètre des galets, la longueur étant de préférence environ le double du diamètre des galets.

10. Dispositif selon l'une quelconque des revendications précédentes, caractérisé en ce que les galets sont conçus de telle sorte que, sur toute la longueur des galets, une partie est enlevée, ladite partie s'étendant entre le trou central et la surface d'enveloppe des galets, par rapport au trou central, la partie a une dimension transversale qui est plus petite que le diamètre du trou central et le diamètre en coupe de l'anneau élastique (12).
